Europäisches Patentamt

European Patent Office

Office européen des brevets

(19)

(11) **EP 1 056 583 B1**

## (12) EUROPÄISCHE PATENTSCHRIFT

(45) Veröffentlichungstag und Bekanntmachung des Hinweises auf die Patenterteilung:
**10.04.2002 Patentblatt 2002/15**

(51) Int Cl.[7]: **B29C 45/76**, B29C 45/77, G05B 19/418

(21) Anmeldenummer: **99902516.6**

(22) Anmeldetag: **05.01.1999**

(86) Internationale Anmeldenummer:
**PCT/EP99/00018**

(87) Internationale Veröffentlichungsnummer:
**WO 99/37462 (29.07.1999 Gazette 1999/30)**

(54) **VERFAHREN ZUR BEURTEILUNG VON SPRITZTEILEN**

METHOD FOR EVALUATING MOULDED PARTS

PROCEDE POUR EVALUER DES PIECES MOULEES

(84) Benannte Vertragsstaaten:
**AT CH DE FR GB IT LI**

(30) Priorität: **20.01.1998 DE 19801881**

(43) Veröffentlichungstag der Anmeldung:
**06.12.2000 Patentblatt 2000/49**

(73) Patentinhaber: **Hehl, Karl**
**72290 Lossburg (DE)**

(72) Erfinder: **Hehl, Karl**
**72290 Lossburg (DE)**

(74) Vertreter: **Reinhardt, Harry et al**
**Mayer, Frank, Reinhardt,**
**Schwarzwaldstrasse 1A**
**75173 Pforzheim (DE)**

(56) Entgegenhaltungen:
EP-A- 0 317 992        EP-A- 0 452 513
EP-A- 0 665 433        US-A- 5 291 423
US-A- 5 550 744

- PATENT ABSTRACTS OF JAPAN vol. 015, no. 171 (M-1108), 30. April 1991 & JP 03 036012 A (TOYO MACH & METAL CO LTD), 15. Februar 1991
- PATENT ABSTRACTS OF JAPAN vol. 018, no. 618 (P-1831), 24. November 1994 & JP 06 231327 A (KONICA CORP), 19. August 1994

**Beschreibung**

Die Erfindung betrifft ein Verfahren zur Beurteilung von in einer Spritzgießmaschine, insbesondere einer Kunststoff-Spritzgießmaschine zur Verarbeitung plastifizierbarer Massen wie Kunststoffen, pulvrigen Massen oder keramischen Massen hergestellten Spritzteilen nach dem Oberbegriff des Anspruches 1.

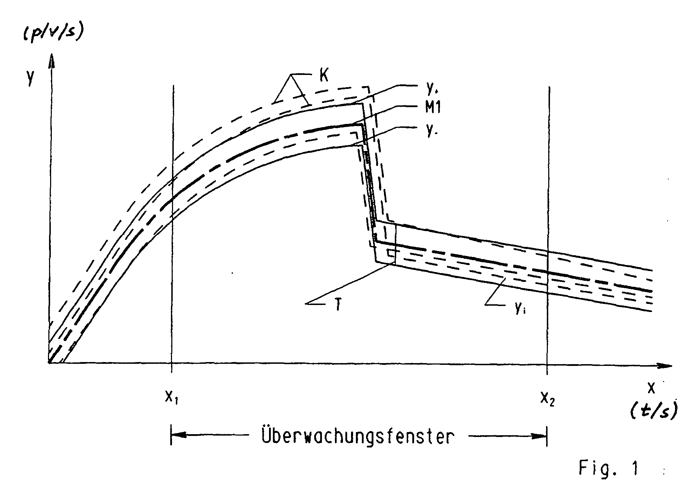

Ein derartiges Verfahren ist aus M. Hoyer und E. Duffner "Grafische Unterstützung vereinfacht Bedienung" in: Kunststoffe 84 (1994), Heft 10, Seiten 1388-1394 erläutert und insbesondere im dortigen Bild 6 dargestellt. Eine entsprechende Darstellung des Standes der Technik findet sich auch als Figur 1 zu dieser Anmeldung. Bei diesem Stand der Technik werden zunächst mehrere Parameterkurven als Funktion eines zweiten Parameters zum Beispiel des Werkzeuginnendrucks über der Zykluszeit erfaßt. Gespeichert werden dabei die Kurven, bei denen nicht defekte Gutteile erzeugt wurden. Aus diesen Kurven wird dann eine Mittelwertkurve M1 gebildet. Aus den zur Verfügung stehenden Werten in y-Richtung wird nun eine Standardabweichung in bekannter Weise z.B. nach der Formel berechnet

$$\Delta y = z * \sqrt{\frac{1}{m-1}\left(\sum_{i=1}^{a} y_i^2 - \frac{1}{m}\left(\sum_{i=1}^{a} y_i\right)^2\right)}$$

mit:

z = Standardnormalvariable z.B. z = 3,29 für 99,9% Vertrauensgrenze
m = Anzahl der Meßzyklen
$y_i$ = Wert des ersten Parameters im i-ten Meßzyklus.

Für eine konstant berechnete Kurvenabweichung wird nun die Spannweite R berechnet durch

$$R_i = \text{Max}_x\left\{|y_i(x) - y(x)| - \text{Min}_x\left(|y_i(x) - y(x)|\right)\right\}$$

mit:

|| = Absolutbetrag
y(x) = Mittelwert des ersten Parameters y in Abhängigkeit des zweiten Paramters x.

Da an mindestens einer Stelle eine Istwertkurve $y_i(x)$ gleich der Referenzkurve y (x) ist, läßt sich damit $R_i$ berechnen, so daß sich die Toleranz berechnen läßt nach der Formel:

$$\Delta y = z * \sqrt{\frac{1}{m-1}\left(\sum_{i=1}^{a} R_i^2 - \frac{1}{m}\left(\sum_{i=1}^{a} R_i\right)^2\right)}$$

Nun kann eine Beurteilung erfolgen, ob bei einem folgenden Herstellungszyklus die Parameterkurve sich im durch das Toleranzband gegebenen zulässigen Bereich liegt oder nicht und je nach den Beurteilungskriterien wird bei einem ein- oder mehrmaligen Verlassen des zulässigen Bereichs das Spritzteil als Schlechtteil beurteilt und verworfen.

Der Nachteil dieser an und für sich bekannten Toleranzbandermittlung ist jedoch, daß sich insbesondere bei starken Wertschwankungen des ersten Parameters, also z.B. des Werkzeuginnendrucks, der Geschwindigkeit oder des Schneckenwegs wie sie z.B. beim Übergang aus der Formfüllphase in die Nachdruckphase auftreten können, das nur in y-Richtung ermittelte Toleranzband sehr schmal wird, so daß eine Vielzahl von Spritzzyklen damit an dieser Stelle aus dem Toleranzband herausfällt, so daß Teile, die an und für sich noch qualitativ zu akzeptieren wären, fälschlicherweise ausgesondert werden.

**EP 1 056 583 B1**

Ähnliche Verfahren sind z.B. aus der DE 35 45 360 A1 bekannt. Dort wird auch eine Gutteilkurve ermittelt und diese wird gegebenenfalls auch abschnittsweise mit einem Toleranzband versehen. Dieses Toleranzband ist durch eine obere und eine untere Hüllkurve gebildet, die sich aus einer Vielzahl von Gutteil-Paramterkurven ergeben. Diese Hüllkurve erfaßt damit alle Spritzzyklen, die zuvor bereits zu Gutteilen geführt haben. Allerdings wird hiermit keine Toleranzbandermittlung betrieben und es wird auch nicht Rücksicht genommen auf eventuelle Einflüsse, die sich nicht im Kurvenbild wiederspiegeln wie z.B. ein hoher Energieaufwand. Vor allem aber sind hiermit keine anerkannten statistischen Qualitätsaussagen über die produzierten Teile möglich.

Aus der EP-0 452 513 B1 ist ein Verfahren entnehmbar, bei dem Druckkurven in Abhängigkeit eines oder mehrerer Parameter aufgezeichnet werden. In Abhängigkeit dieser Kurven und der dabei ermittelten Werte können dann gegebenenfalls auch abschnittsweise Parameterwerte zur Bestimmung eines zulässigen Bereichs eingegeben werden. Vorzugsweise werden nach einer gewissen Vorlaufszeit die letzten drei Druckkurven betrachtet und aus einer die verschiedenen Druckkurven wiedergebenden Zahlentafel entsprechende Werte vom Benutzer ausgewählt und per Hand eingegeben. Hierdurch erfolgt keine Toleranzbandberechnung.

Aus der DE 41 08 992 C2 ist eine Einrichtung zur Regelung von Produkteigenschaften bekannt, wobei das jeweilige Formteilgewicht mit der für die Herstellung des Formteils vom Kolben aufgewandten Arbeit korreliert wird. In Abhängigkeit der jeweils erforderlichen Arbeit wird das hergestellte Formteil als Gut- oder Schlechtteil beurteilt. Damit erfolgt eine Beurteilung des Schlechtteils lediglich in Abhängigkeit eines Parameters.

Aus der EP 0 317 992 A2 ist ein Verfahren zur Beurteilung von Gutoder Schlechtteilen bekannt, bei dem die Temperatur der Spritzgießform, der Formmasse, des Plastifizierzylinders oder der Düse mit der Zeit korreliert wird. Auch hier erfolgt eine Spritzteilbeurteilung lediglich in Abhängigkeit eines Parameters.

Aus der US-A 5,550,744 ist es bekannt, mehrere Qualitätsparameter auszuwählen und in Abhängigkeit der Einstellparameter Datenfelder zu ermitteln, in deren Schnittpunkte die Werte von Gutteilen liegen müssen. Eine Bestimmung eines Toleranzbandes über den gesamten Bereich in Abhängigkeit von nur zwei Parametern, die zugleich die Parameterkurve bestimmen, erfolgt dadurch jedoch nicht. Damit ist der dort für die Überwachung zu treibende Regelungsaufwand unverhältnismäßig im Vergleich zu der damit gewonnenen Bewertung, zumal es auch hier noch zu dem bekannten Problem kommt, daß gerade dort, wo die Parameterschwankungen am größten sind, das Toleranzband am engsten ausfällt.

Hiervon ausgehend liegt der vorliegenden Erfindung die Aufgabe zugrunde, eine Toleranzbandberechnung durchzuführen, die insbesondere bei starken Schwankungen des Überwachten Parameters ein geeignetes Toleranzband zur Verfügung stellt, um die Ausschußrate weiter auf die tatsächlichen Schlechtteile zu reduzieren.

Diese Aufgabe wird durch ein Verfahren mit den Merkmalen des Anspruches 1 gelöst.

Während in den bekannten Verfahren bisher die Standardabweichung üblicherweise nur in y-Richtung berechnet wurde, erfolgt jetzt eine zusätzliche Berechnung auch x-koordinatenabhängig. Dies führt dazu, daß insbesondere in den Bereichen, in denen der überwachte Parameter stark in y-Richtung schwankt, sich ein breiteres Toleranzband einstellt, so daß auch Spritzzyklen jetzt noch Gutteile produzieren, die bisher ausgesondert worden wären. Da aber bereits bei geringen z.B. zeitlichen Verzögerungen es zu einer derartigen Überschreitung des Toleranzbandes allein durch ein Versetzen des Schwankungsbereichs in den Darstellungen nach rechts erfolgen konnte, wird dadurch merklich die Ausschußrate reduziert. Dennoch ist sichergestellt, daß Parameterkurven, die außerhalb dieses zulässigen Bereichs liegen, nicht zu Gutteilen führen können, so daß die dortigen Produkte zuverlässig ausgesondert werden können.

Weitere Vorteile ergeben sich aus den Unteransprüchen und der folgenden Beschreibung.

Kurzbeschreibung der Figuren

Es zeigen:

Fig. 1    Eine Toleranzbandermittlung nach dem Stand der Technik,
Fig. 2    eine Toleranzbandermittlung infolge der Berechnung einer x-koordinatenabhängigen Standardabweichungskurve,
Fig. 3    eine Toleranzbandkurve, die normal zur Mittelwertkurve berechnet wurde.

Fig. 1 zeigt zunächst das Ergebnis eines bisher im Stand der Technik üblichen Verfahrens zur Bestimmung eines Toleranzbandes. Auf der Abszisse wird dabei ein vorgegebener zweiter Parameter x angegeben und auf der Ordinate ein erster Parameter y. Für y können die in Klammer gesetzten Werte des Drucks p, sei es Hydraulikdruck oder Forminnendruck oder die Geschwindigkeit v des Fördermittels oder der Weg s des Fördermittels als erster Parameter eingesetzt werden. Als zweiter Parameter kommt im wesentlichen die Zykluszeit t oder der Weg s des Fördermittels in Betracht.

In sämtlichen Figuren werden durch die schwach gestrichelten Linien Istwert-Kurven K des ersten Parameters y gezeigt, die als Funktion des vorgegebenen zweiten Parameters x Änderungen des ersten Parameters y während einer Vielzahl von Spritzvorgängen angeben. Es handelt sich dabei vorzugsweise zur Toleranzbandermittlung um Spritzvorgänge, in denen nicht defekte Gutteile erzeugt werden. Die damit gegebene Gruppe von Kurven wird anschließend zu einer Mittelwertkurve M1 in Fig. 1 gemittelt, die ebenfalls zwar gestrichelt, aber stärker durchgezogen ist. Diese Mittelwertkurve M1 gibt an jedem Wert des zweiten Parameters x den Mittelwert der Kurven des ersten Parameters y an. Aus den gespeicherten Kurven K ist damit eine berechnete Mittelwertkurve M1 gebildet worden nach der Formel.

$$y = \frac{1}{m}\Sigma_i y_i$$

mit:

y = Mittelwert
$y_i$ = Wert des ersten Parameters im i-ten Meßzyklus,
m = Anzahl der Meßzyklen.

Hieraus kann mit einer Standardnormalvariablen z = 3,29 für 99,9% Vertrauensgrenze eine Toleranz berechnet werden zu:

$$\Delta y = z \cdot \sqrt{\frac{1}{m-1}\left(\sum_{i=1}^{a} y_i^2 - \frac{1}{m}\left(\sum_{i=1}^{a} y_i\right)^2\right)}$$

Für eine konstant berechnete Kurvenabweichung wird nun die Spannweite R berechnet durch

$$R_i = \text{Max}_x\left\{|y_i(x) - y(x)| - \text{Min}_x\left(|y_i(x) - y(x)|\right)\right\}$$

mit

|| = Absolutbetrag
$y_i(x)$ = Wert des ersten Parameters als Funktion des zweiten Parameters im i-ten Meßzyklus,
y(x) = Mittelwert des ersten Parameters y in Abhängigkeit des zweiten Paramters x.

Da an mindestens einer Stelle eine Istwert-Kurve $y_j(x)$ gleich der Mittelwertkurve M1 und damit gleich y(x) ist, läßt sich damit die Toleranz berechnen zu:

$$\Delta y = z \cdot \sqrt{\frac{1}{m-1}\left(\sum_{i=1}^{a} R_i^2 - \frac{1}{m}\left(\sum_{i=1}^{a} R_i\right)^2\right)}$$

Dies führt zu dem durchgezogenen zulässigen Bereich T in Fig. 1. Dieser zulässige Bereich T des ersten Parameters y wird entlang der Mittelwertkurve auf der Grundlage der ermittelten Standardabweichung eingestellt. Im folgenden erfolgt eine Istwert-Beurteilung des ersten Parameters, der bei der aktuellen Herstellung eines Spritzteils entsteht, als Funktion des zweiten Parameters dahingehend, ob der Istwert in den zulässigen Bereich T fällt oder nicht. Verläßt also bei der konkreten Herstellung eines folgenden Spritzzyklus die Istwert-Kurve K den zulässigen Bereich T, ist davon auszugehen, daß es sich bei dem mit diesem Spritzzyklus hergestellten Spritzteil um ein Schlechtteil handelt. Hier gibt es allerdings die im Stand der Technik bekannten Möglichkeiten, einzelne Überschreitungen zuzulassen und insofern als zusätzliches Beurteilungskriterium einzuführen, daß ein Spritzteil erst dann als Schlechtteil bewertet wird, wenn das Toleranzband und damit der zulässige Bereich T mehrfach verlassen wird.

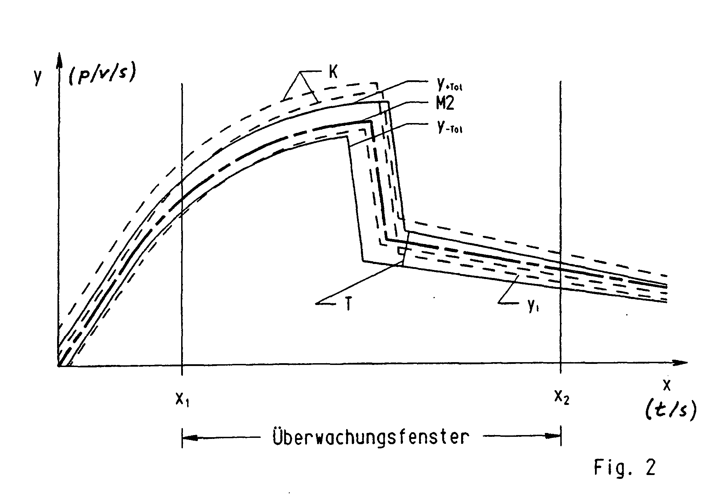

Von der Darstellung gemäß Fig. 1 unterscheidet sich die erfindungsgemäße Ausführung gemäß Fig. 2 zunächst dadurch, daß nun auch in dem Schwankungsbereich, in dem der erste Parameter y stark abfällt, ein breiteres Toleranzband bzw. ein breiterer zulässiger Bereich. T ermittelt wurde. Während nämlich gemäß Fig. 1 nur in y-Richtung die Standardabweichung ermittelt wurde, wird sie hier nun auch x-koordinatenabhängig ermittelt.

Wie zuvor wurden mehrere Istwert-Kurven K zur Mittelwertkurve M2 gemittelt, jedoch wird dann dieser Bereich mit einer Toleranz $y_{+Tol}$ bzw. $y_{-Tol}$ versehen. Die Berechnung der Mittelwertkurve erfolgt dabei nach der Formel:

$$y(x) = \frac{1}{m} \sum_{i=1}^{m} y_i(x)$$

mit: y(x) = Mittelwert an der Stelle x
$y_i(x)$ = Istwertkurve aus i-ten Meßzyklus
m = Anzahl der Meßzyklen.

Dies führt dann zum x-koordinatenabhängigen Toleranzband mit der Toleranz ermittelt nach folgender Formel:

$$\Delta y(x) = z * \sqrt{\frac{1}{m-1} \left( \sum_{i=1}^{m} y_i^2(x) - y^2(x) \right)}$$

z,m und $y_i(x)$ sind wie bereits erläutert die Standardnormalvariable, die Anzahl der Meßzyklen und der Wert des ersten Parameters y in Abhängigkeit des zweiten Parameters x. Insofern findet hier eine Überlagerung der Standardabweichungen in Abhängigkeit des zweiten Parameters und der Standardabweichung des ersten Parameters statt. Der aufgeweitete Bereich im Umfeld der starken Parameterschwankung verdeutlicht, daß mehr Kurven noch zulässige Kurven sind, die damit Gutteile produzieren, als dies in Fig. 1 der Fall war. Ferner ergibt sich in den Bereichen, in denen weniger Schwankungen vorhanden sind, von selbst eine geringere Toleranzbandbreite, wie insbesondere zu Beginn und am Ende der Aufzeichnung zu erkennen ist.

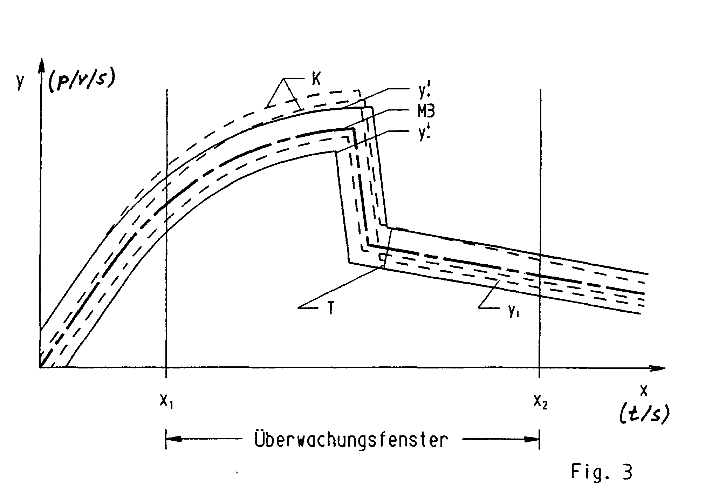

Eine weitere Möglichkeit besteht darin, wie zuvor die Istwert-Kurven K zur Mittelwertkurve M3 gemäß Fig. 3 zu mitteln. Im Unterschied zu den vorausgegangenen Möglichkeiten wird die Standardabweichung in der xy-Ebene normal zur Mittelwertkurve M3 zur Bildung des Toleranzbandes berechnet. Damit werden zwar Mittelwert y(x) und Toleranz wie zuvor ermittelt, die Toleranzbandkurve wird dann als Kurve zu y(x) mit Abstand $\Delta y(x)$ berechnet. Dies wird im folgenden zur Vereinfachung in Vektordarstellung erläutert.

Für die Mittelwertkurve ergibt sich der Vektor in:

$$\Delta y'(x) = \begin{pmatrix} x \\ y(x) \end{pmatrix}$$

mit:

$$x = \frac{1}{m} \sum_{i=1}^{m} x_i$$

$$y(x) = \frac{1}{m} \sum_{i=1}^{m} y_i(x)$$

wobei:

$x$ = Mittelwert an der Stelle x
$x_i$ = Wert x im i-ten Meßzyklus
$y(x)$ = Mittelwert an der Stelle x
$y_i$ = Istwert aus i-ten Meßzyklus
$m$ = Anzahl der Meßzyklen.

Dieser Vektor läßt sich in normaler Richtung umrechnen läßt in den Vektor

$$\Delta \vec{y}_{NEU}(x) = \begin{pmatrix} \Delta y_{1,NEU}(x) \\ \Delta y_{2,NEU}(x) \end{pmatrix}$$

mit:

$$\Delta y_{1,NEU}(x) = \frac{1}{\sqrt{1 + \left(\frac{dy(x)}{dx}\right)^2}} * \Delta y(x) * \frac{dy(x)}{dx}$$

$$\Delta y_{2.NEU}(x) = \frac{1}{\sqrt{1 + \left(\frac{dy(x)}{dx}\right)^2}} * \Delta y(x)$$

Dies hat den Vorteil, daß nun über den gesamten Verlauf ein Toleranzband in gleichmäßiger Breite geführt werden kann, das allen Erfordernissen Rechnung trägt, die insbesondere im Bereich von starken Parameterschwankungen auftreten. In allen drei Figuren besteht darüber hinaus die Möglichkeit, auch Überwachungsfenster zu definieren, in denen hauptsächlich die kritischen Bereiche liegen, da in der Praxis bekannt ist, daß manche Bereiche stärker zu überwachen sind wie andere. Auch können abschnittsweise unterschiedliche Toleranzbreiten bestimmt werden. Bewußt wird dabei der Aufwand für eine Berechnung der Standardabweichung normal zur Mittelwertkurve in Kauf genommen, obwohl eine digitale Differenziation äußerst ungenau ist. Dennoch führt dies zu einem verringerten Steuer- und Rechnungsaufwand unter Bereitstellung eines optimierten Toleranzbandes zur Verringerung des bisherigen Ausschusses.

Als erfaßte Kurven K kommen bei einer Kunststoff-Spritzgießmaschine insbesondere fünf Arten von Kurven in Betracht, nämlich

$p(t)$ = die Funktion des Druckes p, vorzugsweise des Hydraulikdruckes oder Forminnendruckes (erster Parameter y) über der Zykluszeit t (zweiter Parameter x),
$v(t)$ = Funktion der Geschwindigkeit v des Fördermittels (erster Paramter y) über der Zykluszeit t (zweiter Parameter x),
$s(t)$ = Funktion des Weges s des Fördermittels (erster Parameter y) über der Zykluszeit t (zweiter Parameter x),
$p(s)$ = Funktion des Druckes p, vorzugsweise des Hydraulikdruckes oder Forminnendruckes, (erster Parameter y) über dem Weg s des Fördermittels (zweiter Parameter x),
$v(s)$ = Funktion der Geschwindigkeit v des Fördermittels (erster Parameter y) über dem Weg s des Fördermittels (zweiter Parameter x).

**Patentansprüche**

1. Verfahren zur Beurteilung von in einer Spritzgießmaschine hergestellten Spritzteilen als Gutteil oder Schlechtteil mit den Schritten:

   - Erfassen je einer Kurve eines ersten Parameters (y), die als Funktion eines vorgegebenen zweiten Parameters (x) Änderungen des ersten Parameters (y) angibt, während einer Vielzahl von Spritzvorgängen, in denen nicht defekte Gutteile erzeugt werden, zur Bildung einer Gruppe von Kurven,
   - Mitteln der Gruppe von Kurven unter Bildung einer Mittelwertkurve (M2,M3), die an jedem Wert des zweiten Parameters (x) den Mittelwert der Kurven des ersten Parameters (y) angibt,
   - Berechnung der Standardabweichung in Abhängigkeit wenigstens eines Parameters,
   - Einstellen eines zulässigen Bereichs (T) dieses Parameters entlang der Mittelwertkurve (M2,M3) auf der Grundlage der ermittelten Standardabweichung,
   - Ausführen einer Istwert-Beurteilung dieses Parameters, der bei der aktuellen Herstellung eines Spritzteils entsteht, dahingehend, ob der Istwert in den zulässigen Bereich fällt,
   - Beurteilen eines Spritzteils als Gutteil, wenn der Istwert im wesentlichen im zulässigen Bereich (T) liegt, bzw. als Schlechtteil, wenn der Istwert nicht im zulässigen Bereich liegt,

   **dadurch gekennzeichnet, daß** zur Einstellung des zulässigen Bereichs (T) die Standardabweichung in Abhängigkeit des zweiten Parameters (x) berechnet wird.

2. Verfahren nach Anspruch 1, **dadurch gekennzeichnet, daß** die Berechnung der Standardabweichung nach der Formel erfolgt

$$\Delta y\,(x) = z * \sqrt{\frac{1}{m-1}\left(\sum_{i=1}^{m} y_i^2(x) - y^2(x)\right)}$$

mit:

   z = Standardnormalvariable
   m = Anzahl der Meßzyklen
   $y_i(x)$ = Wert des ersten Parameters als Funktion des zweiten Parameters im i-ten Meßzyklus.

3. Verfahren nach Anspruch 1, **dadurch gekennzeichnet, daß** die Festlegung der Standardabweichung normal zur Mittelwertkurve (M3) erfolgt.

4. Verfahren nach Anspruch 1 oder 3, **dadurch gekennzeichnet, daß** der erste Parameter (y) der Druck (p) und der zweite Parameter (x) die Zykluszeit (t) ist und daß die erfaßte Kurve eine Funktion des Druckes (p) über der Zykluszeit (t) ist.

5. Verfahren nach Anspruch 1 oder 3, **dadurch gekennzeichnet, daß** der erste Parameter (y) die Geschwindigkeit (v) des Fördermittels und der zweite Parameter (x) die Zykluszeit (t) ist und daß die erfaßte Kurve eine Funktion der Geschwindigkeit (v) über der Zykluszeit (t) ist.

6. Verfahren nach Anspruch 1 oder 3, **dadurch gekennzeichnet, daß** der erste Parameter (y) der Weg (s) des Fördermittels und der zweite Parameter (x) die Zykluszeit (t) ist und daß die erfaßte Kurve eine Funktion des Wegs (s) über der Zykluszeit (t) ist.

7. Verfahren nach Anspruch 1 oder 3, **dadurch gekennzeichnet, daß** der erste Parameter (y) der Druck (p) und der zweite Parameter (x) der Weg (s) des Fördermittels ist und daß die erfaßte Kurve eine Funktion des Drucks (p) über dem Weg (s) ist.

8. Verfahren nach Anspruch 1 oder 3, **dadurch gekennzeichnet, daß** der erste Parameter (y) die Geschwindigkeit (v) des Fördermittels und der zweite Parameter (x) der Weg (s) des Fördermittels ist und daß die erfaßte Kurve eine Funktion der Geschwindigkeit (v) über dem Weg (s) ist.

**Claims**

1.  Method for evaluating injection-moulded parts, produced in an injection-moulding machine, as a good moulding or a bad moulding, said method comprising the following steps:

    - determining a respective curve of a first parameter (y), which curve indicates changes in the first parameter (y) as a function of a prescribed second parameter (x), during a plurality of injection-moulding operations wherein non-defective good mouldings are produced, to form a group of curves,
    - averaging the group of curves to form a mean value curve (M2, M3), which group indicates the mean value of the curves of the first parameter (y) for each value of the second parameter (x),
    - calculating the standard deviation in dependence on at least one parameter,
    - setting a permissible range (T) of this parameter along the mean value curve (M2, M3) on the basis of the determined standard deviation,
    - effecting an actual value assessment of this parameter, which is produced during the actual production of a moulding, to check whether the actual value falls within the permissible range, and
    - evaluating a moulding as a good moulding when the actual value lies substantially within the permissible range (T), or respectively as a bad moulding when the actual value does not lie within the permissible range,

    **characterised in that**, to set the permissible range (T), the standard deviation is calculated in dependence on the second parameter (x).

2.  Method according to claim 1, **characterised in that** the calculation of the standard deviation is effected according to the formula:

$$\Delta y \ (x) = z \bullet \sqrt{\frac{1}{m-1} \left( \sum_{i=1}^{m} y_i^2 (x) - y^2 (x) \right)}$$

with:

   z = standard normal variable,
   m = number of measuring cycles,
   $y_i(x)$ = value of the first parameter as a function of the second parameter in the 1th measuring cycle.

3.  Method according to claim 1, **characterised in that** the determination of the standard deviation is effected perpendicular to the mean value curve (M3).

4.  Method according to claim 1 or 3, **characterised in that** the first parameter (y) is the pressure (p), and the second parameter (x) is the cycle time (t), and **in that** the determined curve is a function of the pressure (p) over the cycle time (t).

5.  Method according to claim 1 or 3, **characterised in that** the first parameter (y) is the velocity (v) of the feeding means, and the second parameter (x) is the cycle time (t), and **in that** the determined curve is a function of the velocity (v) over the cycle time (t).

6.  Method according to claim 1 or 3, **characterised in that** the first parameter (y) is the path (s) of the feeding means, and the second parameter (x) is the cycle time (t), and **in that** the determined curve is a function of the path (s) over the cycle time (t).

7.  Method according to claim 1 or 3, **characterised in that** the first parameter (y) is the pressure (p), and the second parameter (x) is the path (s) of the feeding means, and **in that** the determined curve is a function of the pressure (p) over the path (s).

8. Method according to claim 1 or 3, **characterised in that** the first parameter (y) is the velocity (v) of the feeding means, and the second parameter (x) is the path (s) of the feeding means, and **in that** the determined curve is a function of the velocity (v) over the path (s).

**Revendications**

1. Procédé pour juger si des pièces injectées, fabriquées dans une machine de moulage par injection, sont bonnes ou mauvaises, comportant les étapes suivantes :

   - enregistrer une courbe d'un premier paramètre (y), qui indique des variations du premier paramètre (y) en tant que fonction d'un deuxième paramètre (x) donné, pendant un grand nombre d'opérations d'injection au cours desquelles sont produites des pièces bonnes non défectueuses, pour former un groupe de courbes,

   - faire la moyenne du groupe de courbes en formant une courbe des valeurs moyennes (M2, M3) qui indique, pour chaque valeur du deuxième paramètre (x), la valeur moyenne des courbes du premier paramètre (y),

   - calculer l'écart standard en fonction d'au moins un paramètre,

   - régler un domaine admissible (T) de ce paramètre le long de la courbe des valeurs moyennes (M2, M3) sur la base de l'écart standard déterminé,

   - exécuter une appréciation de valeur réelle de ce paramètre, qui s'établit lors de la fabrication actuelle d'une pièce injectée, pour savoir si la valeur réelle tombe dans le domaine admissible,

   - juger qu'une pièce injectée est bonne si la valeur réelle se situe sensiblement dans le domaine admissible (T), ou qu'elle est mauvaise si la valeur réelle ne se situe pas dans le domaine admissible,

   **caractérisé en ce que** pour régler le domaine admissible (T), on calcule l'écart standard en fonction du deuxième paramètre (x).

2. Procédé selon la revendication 1, **caractérisé en ce que** le calcul de l'écart standard s'effectue par la formule :

$$\Delta y\ (x) = z \cdot \sqrt{\frac{1}{m-1}\left(\sum_{i=1}^{m} y_i^2(x) - y^2(x)\right)}$$

   avec : z = variable normale standard

   m = nombre de cycles de mesure

   $y_i(x)$ = valeur du premier paramètre en tant que fonction du deuxième paramètre dans le $i^{ème}$ cycle de mesure.

3. Procédé selon la revendication 1, **caractérisé en ce que** la définition de l'écart standard s'effectue normalement à la courbe des valeurs moyennes (M3).

4. Procédé selon la revendication 1 ou 3, **caractérisé en ce que** le premier paramètre (y) est la pression (p) et le deuxième paramètre (x) le temps de cycle (t) et **en ce que** la courbe obtenue est une fonction de la pression (p) par rapport au temps de cycle (t).

5. Procédé selon la revendication 1 ou 3, **caractérisé en ce que** le premier paramètre (y) est la vitesse (v) du moyen de transport et le deuxième paramètre (x) le temps de cycle (t) et **en ce que** la courbe obtenue est une fonction de la vitesse (v) par rapport au temps de cycle (t).

6.  Procédé selon la revendication 1 ou 3, **caractérisé en ce que** le premier paramètre (y) est la course (s) du moyen de transport et le deuxième paramètre (x) le temps de cycle (t) et **en ce que** la courbe obtenue est une fonction de la course (s) par rapport au temps de cycle (t).

7.  Procédé selon la revendication 1 ou 3, **caractérisé en ce que** le premier paramètre (y) est la pression (p) et le deuxième paramètre (x) la course (s) du moyen de transport et **en ce que** la courbe obtenue est une fonction de la pression (p) par rapport à la course (s).

8.  Procédé selon la revendication 1 ou 3, **caractérisé en ce que** le premier paramètre (y) est la vitesse (v) du moyen de transport et le deuxième paramètre (x) la course (s) du moyen de transport et **en ce que** la courbe obtenue est une fonction de la vitesse (v) par rapport à la course (s).

Fig. 1

Fig. 2

Fig. 3